# EUROPÄISCHE PATENTSCHRIFT

(11) **EP 3 111 028 B1**
(45) Veröffentlichungstag und Bekanntmachung des Hinweises auf die Patenterteilung: **12.12.2018**
(21) Anmeldenummer: 15704542.8
(22) Anmeldetag: 13.02.2015
(51) Int. Cl.: B60N 2/015, B60N 2/36, E05B 77/38, E05B 77/04, E05B 85/26

(54) **VERRIEGELUNGSEINHEIT FÜR EINEN FAHRZEUGSITZ UND FAHRZEUGSITZ**
LOCKING UNIT FOR A VEHICLE SEAT, AND VEHICLE SEAT
UNITÉ DE VERROUILLAGE POUR SIÈGE DE VÉHICULE ET SIÈGE DE VÉHICULE

(30) Priorität: 27.02.2014 DE 102014203577; 28.05.2014 DE 102014210165
(43) Veröffentlichungstag der Anmeldung: 04.01.2017
(73) Patentinhaber: Adient Luxembourg Holding S.à r.l., 1855 Luxembourg (LU)
(72) Erfinder: VEDDER, Andreas, 42781 Haan (DE); MOELLER, Uwe, 42697 Solingen (DE); GORDEENKO, Igor, 50226 Frechen (DE); DEMIRCI, Oezkan, 44795 Bochum (DE); HANDL, Patrick, 50739 Köln (DE); MUELLER, Peter, 67686 Mackenbach (DE); HAENSEL, Richard, 55237 Flonheim (DE); HABER, Stefan, 66955 Pirmasens (DE); WINDECKER, Volker, 67729 Sippersfeld (DE)
(74) Vertreter: Liedhegener, Ralf
(86) Internationale Anmeldenummer: PCT/EP2015/053104
(87) Internationale Veröffentlichungsnummer: WO 2015/128209

(56) Entgegenhaltungen:
- WO-A2-2009/150225
- WO-A2-2010/054860
- DE-A1-102010 003 500
- FR-A1- 2 930 581

## Beschreibung

Die Erfindung betrifft eine Verriegelungseinheit für einen Fahrzeugsitz mit den Merkmalen des Oberbegriffs des Anspruchs 1. Die Erfindung betrifft auch einen Fahrzeugsitz mit den Merkmalen des Anspruchs 12.

### Stand der Technik

Aus der WO 2010/054860 A2 ist eine gattungsgemäße Verriegelungseinheit für einen Fahrzeugsitz bekannt. Eine derartige Verriegelungseinheit umfasst eine um eine Schwenkachse schwenkbar gelagerte Drehfalle zum Verriegeln mit einem Verriegelungsbolzen. Eine um eine andere Schwenkachse schwenkbar gelagerte Rastklinke sichert als Sicherungselement die Drehfalle im verriegelten Zustand der Verriegelungseinheit. Ein als Toleranzausgleichsklinke bezeichnetes, schwenkbar gelagertes Spannelement übt als weiteres Sicherungselement auf die Drehfalle ein schließendes Moment aus und eliminiert auf diese Art zwischen der Drehfalle und dem Verriegelungsbolzen vorhandenes Spiel.

Aus der DE 20 2011 100 040 U1 ist ebenfalls eine gattungsgemäße Verriegelungseinheit für einen Fahrzeugsitz bekannt. Die Verriegelungseinheit weist zwei Lagerbolzen auf, welche der schwenkbaren Lagerung der Drehfalle sowie der Rastklinke und des Spannelements dienen. Die beiden Lagerbolzen dienen auch der Befestigung der Verriegelungseinheit an dem Strukturteil des Fahrzeugsitzes und sind annähernd hohlzylindrisch ausgebildet. Zur Befestigung der Verriegelungseinheit an dem Strukturteil des Fahrzeugsitzes sind ferner zwei Schrauben vorgesehen, welche je einen der beiden Lagerbolzen durchgreifen und in das Strukturteil oder eine zusätzliche, an dem Strukturteil befestigte, Mutter eingeschraubt sind.

Bei besagten bekannten Verriegelungseinheiten weist die Drehfalle jeweils vier Konturen auf, welche unterschiedliche Funktionen erfüllen. Eine Haltekontur dient zum Festhalten des Verriegelungsbolzens im verriegelten Zustand. Eine Abstützkontur wirkt mit dem Spannelement zur Spielfreistellung sowie mit der Rastklinke zum Sichern der Drehfalle im verriegelten Zustand zusammen. Eine Offenhaltekontur wirkt als Blockierelement mit der Rastklinke zum Sichern der Rastklinke im entriegelten Zustand zusammen. Eine Schließkontur dient beim Entriegeln der Verriegelungseinheit zum Auswerfen des Verriegelungsbolzens. Beim Verriegeln der Verriegelungseinheit gelangt der Verriegelungsbolzen in Anlage an die Schließkontur und schwenkt dadurch die Drehfalle in ihre geschlossene Stellung und die Verriegelungseinheit gelangt in den verriegelten Zustand.

Im verriegelten Zustand der Verriegelungseinheit ist die Drehfalle in der geschlossenen Stellung und die Haltekontur hält den Verriegelungsbolzen fest. Im entriegelten Zustand der Verriegelungseinheit ist die Drehfalle in der geöffneten Stellung.

Derartige Verriegelungseinheiten dienen beispielsweise zur Verriegelung einer Rückenlehne eines Fahrzeugsitzes an einem Sitzteil und/oder an einer Karosserie oder Struktur eines Fahrzeugs oder zur Verriegelung des Fahrzeugsitzes an der Karosserie oder Struktur des Fahrzeugs.

Auch Motorhauben, Heckklappen oder Türen von Fahrzeugen lassen sich mit solchen Verriegelungseinheiten mit der Karosserie oder Struktur des Fahrzeugs verriegeln.

Beispielsweise aus der DE 10 2006 003 022 A1, aus der DE 10 2009 021 297 A1, aus der DE 103 27 448 A1, aus der DE 20 2008 012 706 U, aus der DE 10 2011 114 148 A1, aus der DE 10 2009 037 037 A1, aus der FR 2 930 581 A1, aus der DE 10 2010 003 500 A1, sowie aus der WO 2009/150225 A2 sind derartige Verriegelungseinheiten, welche auch als Schlösser oder Drehfallenschlösser bezeichnet werden, bekannt.

### Aufgabe

Der Erfindung liegt die Aufgabe zu Grunde, eine Verriegelungseinheit der eingangs genannten Art zu verbessern, insbesondere die Reibung zwischen einem Blockierelement und einem Sicherungselement beim Verriegeln der Verriegelungseinheit zu reduzieren.

### Lösung

Diese Aufgabe wird erfindungsgemäß durch eine Verriegelungseinheit für einen Fahrzeugsitz mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Eine gattungsgemäße Verriegelungseinheit für einen Fahrzeugsitz umfasst eine zwischen einer geöffneten Stellung und einer geschlossenen Stellung um eine erste Schwenkachse schwenkbar gelagerte Drehfalle und mindestens ein um eine in eine Axialrichtung verlaufende zweite Schwenkachse schwenkbar gelagertes Sicherungselement zur Sicherung der geschlossenen Stellung der Drehfalle und ein Blockierelement, welches bei in geöffneter Stellung befindlicher Drehfalle das Sicherungselement in einer geöffneten Position blockiert.

Erfindungsgemäß ist das Blockierelement relativ zu dem Sicherungselement in eine Richtung parallel zu der Axialrichtung beweglich.

Dadurch muss das Sicherungselement beim Verriegeln der Verriegelungseinheit nicht an dem Blockierelement entlang gleiten, sondern das Blockierelement kann sich in einer Richtung senkrecht zu der Bewegungsrichtung des Sicherungselements vor dieses schieben. Dadurch ist die Reibung zwischen dem Blockierelement und dem Sicherungselement beim Verriegeln der Verriegelungseinheit reduziert und die zum Verriegeln erforderliche Kraft ist ebenfalls reduziert.

Eine einfache Bauform der Verriegelungseinheit erhält man, wenn die erste Schwenkachse, um welche die Drehfalle schwenkbar ist, parallel zu der Axialrichtung verläuft.

Vorteilhaft ist das Blockierelement als von der Drehfalle separates Bauteil ausgebildet. Das Blockierelement muss somit nicht die Dicke der Drehfalle aufweisen, sondern kann dünner ausgeführt sein. Dadurch werden Gewicht und Bauraum eingespart.

Vorzugsweise ist das Blockierelement überwiegend parallel zu der Axialrichtung federnd ausgebildet. Dadurch schiebt sich das Blockierelement selbstständig zum Blockieren des Sicherungselements vor dieses.

Erfindungsgemäß ist das Blockierelement Teil einer Federscheibe, welche ein Federscheibenloch aufweist, dessen Zentralachse in Axialrichtung verläuft.

Vorteilhaft ist das Blockierelement dabei als Federarm ausgebildet, welcher von einem Grundkörper der Federscheibe in Tangentialrichtung absteht.

Das Blockierelement ist also vorzugsweise ein Federarm, welcher Teil einer Federscheibe ist, wobei die Federscheibe einen annähernd flachen Grundkörper mit annähernd rundem Querschnitt aufweist. Dadurch ergibt sich eine verhältnismäßig kompakte Bauform für die Federscheibe.

Erfindungsgemäß durchragt ein Lagerbolzen, auf welchem das Sicherungselement gelagert ist, das Federscheibenloch. Dadurch ergibt sich eine verhältnismäßig kompakte Bauform für die Verriegelungseinheit bei verhältnismäßig hoher Robustheit.

Dabei ist die Federscheibe erfindungsgemäß drehfest mit einer Seitenplatte der Verriegelungseinheit verbunden, an welcher auch der besagte Lagerbolzen befestigt ist.

Gemäß einer vorteilhaften Weiterbildung der Erfindung ist die Federscheibe in axialer Richtung durch eine Stufe in dem Lagerbolzen gesichert.

Vorzugsweise weist die Drehfalle ein Drehfallenloch auf, welches von einem Lagerbolzen durchragt wird, dessen Mittelachse mit der ersten Schwenkachse fluchtet.

Vorteilhaft ist die Federscheibe derart angeordnet, dass der Federarm auf die in der geschlossenen Stellung befindliche Drehfalle eine Kraft in eine Richtung parallel zu der Axialrichtung ausübt. Dadurch wirkt auf die Drehfalle ein Moment um eine Achse, welche annähernd senkrecht zu der ersten Schwenkachse verläuft. Dieses Moment verringert oder eliminiert ein zwischen dem Drehfallenloch und dem Lagerbolzen vorhandenes Spiel.

Die Aufgabe wird auch durch einen Fahrzeugsitz mit den im Anspruch 14 genannten Merkmalen gelöst, welcher mindestens eine erfindungsgemäße Verriegelungseinheit umfasst.

### Figuren und Ausführungsformen der Erfindung

Im Folgenden ist die Erfindung anhand eines in den Zeichnungen dargestellten vorteilhaften Ausführungsbeispiels näher erläutert. Die Erfindung ist jedoch nicht auf dieses Ausführungsbeispiel beschränkt. Es zeigen:

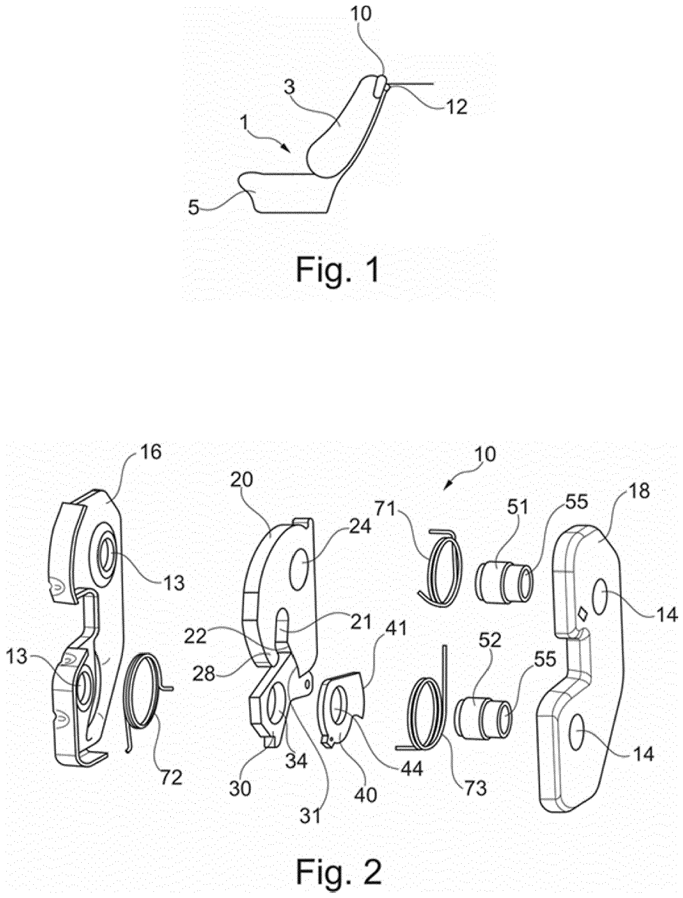

- Fig. 1:: eine schematische Seitenansicht eines Fahrzeugsitzes,
- Fig. 2:: eine Explosionsdarstellung einer gattungsgemäßen Verriegelungseinheit gemäß dem Stand der Technik,

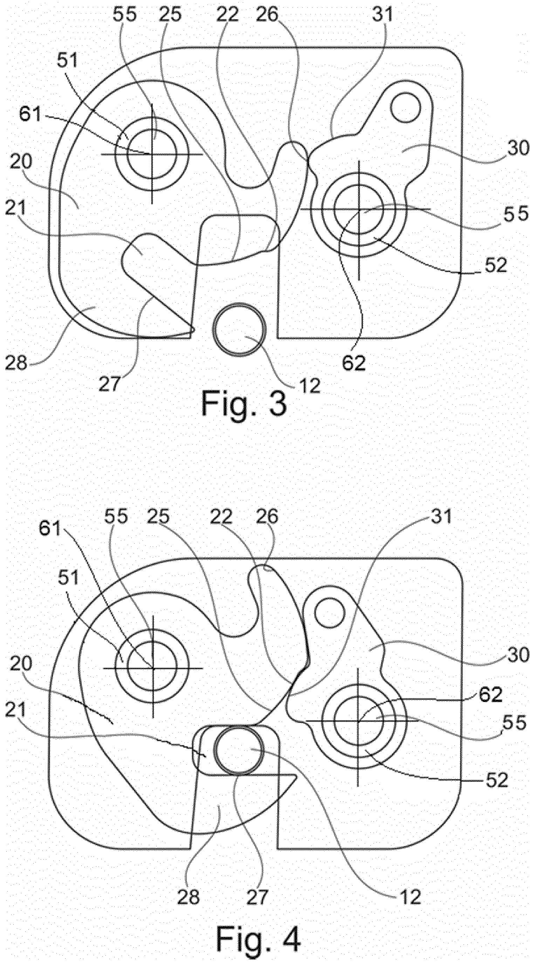

- Fig. 3:: eine schematische Seitenansicht einer weiteren gattungsgemäßen Verriegelungseinheit gemäß dem Stand der Technik im entriegelten Zustand,
- Fig. 4:: eine schematische Seitenansicht der gattungsgemäßen Verriegelungseinheit gemäß Fig. 3 im verriegelten Zustand,
- Fig. 5:: eine teilweise Seitenansicht eines Ausführungsbeispiels einer erfindungsgemäßen Verriegelungseinheit im entriegelten Zustand,
- Fig. 6:: eine teilweise Seitenansicht der Verriegelungseinheit aus Fig. 5 während eines Verriegelungsvorgangs,
- Fig. 7:: eine teilweise Draufsicht auf die Verriegelungseinheit gemäß Fig. 6,
- Fig. 8:: eine teilweise Seitenansicht der Verriegelungseinheit aus Fig. 5 im verriegelten Zustand,
- Fig. 9:: eine teilweise Draufsicht auf die Verriegelungseinheit gemäß Fig. 8,
- Fig. 10:: eine Explosionsdarstellung der Verriegelungseinheit aus Fig. 5 und
- Fig. 11:: eine perspektivische Darstellung einer Federscheibe der Verriegelungseinheit aus Fig. 5.

In einem Kraftfahrzeug ist eine Verriegelungseinheit 10 zur Anbindung einer Rückenlehne 3 eines Fahrzeugsitzes 1, insbesondere eines Rücksitzes, an einer Fahrzeugstruktur vorgesehen. Die Rückenlehne 3 ist dabei von einer Gebrauchsstellung in eine Nichtgebrauchsstellung schwenkbar an einem Sitzteil 5 angebracht.

Die Verriegelungseinheit 10 ist aber auch an anderen Stellen einsetzbar, beispielsweise zur Befestigung des Sitzteils 5 des Fahrzeugsitzes 1 an der Bodenstruktur des Kraftfahrzeugs oder in einem Türschloss.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Eine Verriegelungseinheit 10 gemäß dem Stand der Technik weist ein Schlossgehäuse auf, welches eine Seitenplatte 16 und eine Abdeckplatte 18 umfasst. Die Grundflächen der Seitenplatte 16 und der Abdeckplatte 18 sind flach ausgestaltet und in einer durch die Fahrtrichtung und die Vertikalrichtung definierten Ebene angeordnet, also senkrecht zur Querrichtung. Die Seitenplatte 16 umfasst zwei kreisrund ausgeführte erste Lagerbohrungen 13. Die Abdeckplatte 18 umfasst zwei kreisrund ausgeführte zweite Lagerbohrungen 14.

In der Seitenplatte 16 und in der Abdeckplatte 18 ist eine Aufnahmeöffnung ausgebildet, welche sich in Richtung eines Gegenelements 12 öffnet, um dieses zum Verriegeln aufzunehmen. Dabei ist die Verriegelungseinheit 10 vorliegend an der Rückenlehne 3 und das Gegenelement 12 an der Fahrzeugstruktur befestigt. Es ist auch denkbar, dass die Verriegelungseinheit 10 an der Fahrzeugstruktur und das Gegenelement 12 an der Rückenlehne 3 befestigt ist. Der von der Aufnahmeöffnung aufzunehmende Abschnitt des Gegenelements 12 verläuft vorliegend horizontal in Querrichtung. Vorliegend ist das Gegenelement 12 ein Verriegelungsbolzen. Das Gegenelement 12 kann auch beispielsweise ein Bügel sein.

Eine Drehfalle 20 ist auf einem ersten Lagerbolzen 51 um eine erste Schwenkachse 61 schwenkbar gelagert, welcher an der Seitenplatte 16 und an der Abdeckplatte 18 befestigt ist. Die Drehfalle 20 weist dazu ein Drehfallenloch 24 auf, welches von dem ersten Lagerbolzen 51 durchragt wird. Die Drehfalle 20 weist ferner zum Zusammenwirken mit dem Gegenelement 12 ein Hakenmaul 21 auf. Mittels einer ersten Feder 71 ist die Drehfalle 20 in Öffnungsrichtung vorgespannt.

Die Drehfalle 20 weist eine Abstützkontur 22 auf, welche das Hakenmaul 21 teilweise seitlich begrenzt. Die Abstützkontur 22 ist annähernd eben ausgebildet, kann aber beispielsweise auch kreisbogenförmig gekrümmt und konkav ausgebildet sein. Im verriegelten Zustand der Verriegelungseinheit 10 weist die Abstützkontur 22 näherungsweise in Richtung eines zweiten Lagerbolzens 52, welcher parallel zu dem ersten Lagerbolzen 51 verläuft.

Auf der dem Drehfallenloch 24 abgewandten Seite des Hakenmauls 21, der Abstützkontur 22 gegenüber liegend, ist das Hakenmaul 21 von einer Nase 28 der Drehfalle 20 seitlich begrenzt. Die Nase 28 weist eine Haltekontur 27 auf, welche im verriegelten Zustand der Verriegelungseinheit 10 an dem Gegenelement 12 anliegt.

Der erste Lagerbolzen 51 ist in eine erste Lagerbohrung 13 der Seitenplatte 16 und in eine zweite Lagerbohrung 14 der Abdeckplatte 18 eingesetzt und steht von den Grundflächen der Seitenplatte 16 und der Abdeckplatte 18 senkrecht ab. Der erste Lagerbolzen 51 verläuft somit vorliegend in Querrichtung. Der erste Lagerbolzen 51 weist eine Durchgangsöffnung 55 mit einem annähernd konstanten Innendurchmesser auf.

Auch der zweite Lagerbolzen 52 ist in je eine erste Lagerbohrung 13 der Seitenplatte 16 und in je eine zweite Lagerbohrung 14 der Abdeckplatte 18 eingesetzt und steht von den Grundflächen der Seitenplatte 16 und der Abdeckplatte 18 senkrecht ab. Der zweite Lagerbolzen 52 verläuft somit ebenfalls vorliegend in Querrichtung. Der zweite Lagerbolzen 52 weist, ebenso wie der erste Lagerbolzen 51, eine Durchgangsöffnung 55 mit einem annähernd konstanten Innendurchmesser auf.

Die Durchgangsöffnungen 55 der Lagerbolzen 51, 52 dienen dazu, ein Befestigungsmittel, beispielsweise eine Schraube, aufzunehmen, mittels dessen die Verriegelungseinheit 10 bei der Montage an der Rückenlehne 3 oder an einem anderen Strukturteil des Fahrzeugsitzes 1 oder des Fahrzeugs befestigt wird. Dazu werden die Schrauben in Befestigungsbohrungen in dem Strukturteil eingeschraubt.

Auf dem zweiten Lagerbolzen 52 ist ein Spannelement 40 um eine zweite Schwenkachse 62 schwenkbar gelagert. Dazu weist das Spannelement 40 ein vorliegend kreisrundes Spannelementloch 44 auf, welches von dem zweiten Lagerbolzen 52 durchdrungen ist. Mittels einer dritten Feder 73 ist das Spannelement 40 zu der Drehfalle 20 hin vorgespannt.

Im verriegelten Zustand der Verriegelungseinheit 10, wenn das Hakenmaul 21 der Drehfalle 20 das Gegenelement 12 aufnimmt, übt das Spannelement 40 aufgrund der Vorspannung durch die dritte Feder 73 als Sicherungselement ein schließendes Moment auf die Drehfalle 20 aus. Dazu weist das Spannelement 40 eine exzentrisch zu dem zweiten Lagerbolzen 52 gekrümmte Spannfläche 41 auf, welche sich in nicht-selbsthemmendem Kontakt mit der Abstützkontur 22 der Drehfalle 20 befindet. Die Spannfläche 41 ist kreisbogenförmig gekrümmt und konvex ausgebildet.

Eine Rastklinke 30 ist auf dem zweiten Lagerbolzen 52 axial neben dem Spannelement 40 angeordnet und ebenfalls um die zweite Schwenkachse 62 schwenkbar auf dem zweiten Lagerbolzen 52 gelagert, also mit dem Spannelement 40 fluchtend. Dazu weist die Rastklinke 30 ein vorliegend kreisrundes Rastklinkenloch 34 auf, welches von dem zweiten Lagerbolzen 52 durchdrungen ist. Mittels einer zweiten Feder 72 ist die Rastklinke 30 zu der Drehfalle 20 hin vorgespannt.

Die Rastklinke 30 weist eine Rastfläche 31 auf, welche sich in Nachbarschaft zu der Spannfläche 41 des Spannelements 40 befindet. Im verriegelten Zustand der Verriegelungseinheit 10 ist die Rastfläche 31 geringfügig beabstandet zu der Abstützkontur 22 der Drehfalle 20 positioniert. Die Rastfläche 31 ist kreisbogenförmig gekrümmt und konvex ausgebildet.

Im Crashfall, wenn die Drehfalle 20 ein öffnendes Moment erfährt, überträgt die Abstützkontur 22 dieses Moment auf die Spannfläche 41 des Spannelements 40, woraufhin das Spannelement 40 in Öffnungsrichtung schwenkt. Die Abstützkontur 22 gelangt dadurch in Anlage an die Rastfläche 31 der Rastklinke 30. Die Rastklinke 30 verhindert dann als weiteres Sicherungselement eine weitere Drehung der Drehfalle 20 und damit ein Öffnen der Verriegelungsvorrichtung 10.

Die Rastklinke 30 und das Spannelement 40 sind mit einem Leerweg auf Mitnahme gekoppelt, beispielsweise mittels einer Schlitz-Zapfen-Führung oder mittels eines axial abstehenden Mitnehmers.

Die zweite Schwenkachse 62, also die Schwenkachse der Rastklinke 30, die vorliegend mit der Mittelachse des zweiten Lagerbolzens 52 und mit der Schwenkachse des Spannelements 40 fluchtet, definiert ein Zylinderkoordinatensystem. Als Axialrichtung wird im Folgenden die Richtung bezeichnet, in welche die zweite Schwenkachse 62 verläuft. Eine Radialrichtung und eine Tangentialrichtung beziehen sich ebenfalls auf besagtes Zylinderkoordinatensystem.

Die erste Schwenkachse 61 der Drehfalle 20, die mit der Mittelachse des ersten Lagerbolzens 51 fluchtet, verläuft parallel zu der Axialrichtung und parallel zu der Querrichtung. Vorliegend, bei der beschriebenen Einbausituation der Verriegelungseinheit 10 an der Rückenlehne 3 des Fahrzeugsitzes 1, verläuft die Axialrichtung parallel zu der Querrichtung.

Im verriegelten Zustand der Verriegelungseinheit 10 befindet sich das Gegenelement 12 in der in der Seitenplatte 16 und der Abdeckplatte 18 gebildeten Aufnahmeöffnung und im Hakenmaul 21 der Drehfalle 20. Die Drehfalle 20 befindet sich in ihrer geschlossenen Stellung. Die Haltekontur 27 der Nase 28 liegt an dem Gegenelement 12 an. Das Spannelement 40 sichert durch Zusammenwirken der Spannfläche 41 mit der Abstützkontur 22 die Drehfalle 20. Die Rastfläche 31 der Rastklinke 30 ist geringfügig von der Abstützkontur 22 der Drehfalle 20 beabstandet.

Zum Öffnen der Verriegelungseinheit 10 wird die Rastklinke 30 von der Drehfalle 20 weg geschwenkt, wodurch sich die Rastfläche 31 der Rastklinke 30 weiter von der Abstützkontur 22 der Drehfalle 20 entfernt. Die Rastklinke 30 nimmt das Spannelement 40 aufgrund der Mitnahmekopplung mit, so dass die Drehfalle 20 nicht länger gesichert ist.

Durch die Vorspannung aufgrund der ersten Feder 71 öffnet die Drehfalle 20, schwenkt also in Öffnungsrichtung. Alternativ oder zusätzlich zu der Vorspannung durch die erste Feder 71 kann die Drehfalle 20 zum Öffnen auch von der Rastklinke 30 oder von dem Spannelement 40 mitgenommen werden.

Aufgrund der Schwenkbewegung der Drehfalle 20 zieht sich das Hakenmaul 21 von der von der Seitenplatte 16 und der Abdeckplatte 18 gebildeten Aufnahmeöffnung zurück und gibt das Gegenelement 12 frei. Das Gegenelement 12 gleitet dabei entlang einer an der Drehfalle 20 vorgesehenen Schließkontur 25 und entfernt sich entgegen der Einschwenkrichtung von der Verriegelungseinheit 10.

Hat das Gegenelement 12 das Hakenmaul 21 verlassen, so befindet sich die Verriegelungseinheit 10 im entriegelten Zustand. Die Drehfalle 20 befindet sich in ihrer geöffneten Stellung. Eine an der Drehfalle 20 vorgesehene Offenhaltekontur 26 dient als Blockierelement und blockiert die Rastklinke 30 in ihrer Position.

Gelangt in diesem entriegelten Zustand der Verriegelungseinheit 10 das Gegenelement 12 wieder in die von der Seitenplatte 16 und der Abdeckplatte 18 gebildete Aufnahmeöffnung und in Anlage an die Schließkontur 25 an dem Rand des Hakenmauls 21, so drückt das Gegenelement 12 die Drehfalle 20 in ihre geschlossene Stellung. Das Spannelement 40 bewegt sich aufgrund seiner Vorspannung durch die dritte Feder 73 entlang der Abstützkontur 22. Von dem Spannelement 40 mitgenommen oder aufgrund der Vorspannung durch die zweite Feder 72 schwenkt die Rastklinke 30, die nun nicht mehr von der Offenhaltekontur 26 blockiert ist, auf die Drehfalle 20 zu, wobei sich die Rastfläche 31 der Abstützkontur 22 der Drehfalle 20 nähert. Danach befindet sich die Verriegelungseinheit 10 wieder im verriegelten Zustand.

Die Drehfalle 20 der Verriegelungseinheit 10 gemäß dem Stand der Technik weist somit eine Abstützkontur 22, eine Schließkontur 25, eine Offenhaltekontur 26 und eine Haltekontur 27 auf.

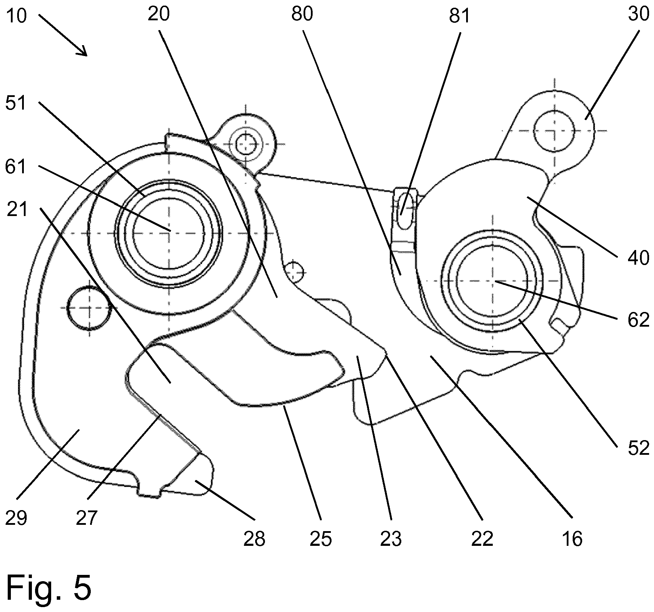

In Fig. 5 ist ein Ausführungsbeispiel einer erfindungsgemäßen Verriegelungseinheit 10 im entriegelten Zustand dargestellt. Die Funktionsweise der erfindungsgemäßen Verriegelungseinheit 10 entspricht weitgehend der der zuvor beschriebenen und aus dem Stand der Technik bekannten Verrieglungseinheit 10, soweit nachfolgend nicht anders beschrieben. Im Folgenden wird im Wesentlichen auf die Unterschiede zwischen diesem Ausführungsbeispiel und der aus dem Stand der Technik bekannten Verriegelungseinheit eingegangen.

Die Drehfalle 20 der Verriegelungseinheit 10 des Ausführungsbeispiels weist eine Abstützkontur 22, eine Schließkontur 25 und eine Haltekontur 27 auf, aber keine Offenhaltekontur. Vorliegend ist die Nase 28 der Drehfalle 20 teilweise mit einer Ummantelung 29 aus Kunststoff versehen. Die Drehfalle 20 ist, ähnlich wie bei der aus dem Stand der Technik bekannten Verriegelungseinheit, auf dem ersten Lagerbolzen 51, welcher in eine erste Lagerbohrung 13 der Seitenplatte 16 eingesetzt ist, um eine erste Schwenkachse 61 schwenkbar gelagert.

Zur Blockierung der Rastklinke 30 und des Spannelements 40 im entriegelten Zustand der Verriegelungseinheit 10 ist eine Federscheibe 80 vorgesehen. Die Federscheibe 80 weist vorliegend einen annähernd flachen Grundkörper 89 mit annähernd rundem Querschnitt auf. Der Grundkörper 89 der Federscheibe 80 weist ein kreisrundes Federscheibenloch 84 auf, welches von dem zweiten Lagerbolzen 52 durchragt wird.

Der zweite Lagerbolzen 52 ist, ähnlich wie bei der aus dem Stand der Technik bekannten Verriegelungseinheit, in eine erste Lagerbohrung 13 der Seitenplatte 16 eingesetzt und dient dazu, die Rastklinke 30 und das Spannelement 40 um eine zweite Schwenkachse 62 schwenkbar zu lagern. Diese zweite Schwenkachse 62 definiert die Axialrichtung des Zylinderkoordinatensystems.

Die Federscheibe 80 ist derart angeordnet, dass eine durch das Federscheibenloch 84 definierte Zentralachse in Axialrichtung verläuft. Die Federscheibe 80 ist drehfest, vorliegend formschlüssig, mit der Seitenplatte 16 verbunden. Dazu weist die Federscheibe 80 eine Umbiegung 85 auf, welche sich von einem äußeren Rand des Grundkörpers 89 aus parallel zur Axialrichtung erstreckt und an einem Rand der Seitenplatte 16 anliegt. Auch andere Befestigungsmöglichkeiten, insbesondere Verdrehsicherungen, der Federscheibe 80 an der Seitenplatte 16 sind denkbar.

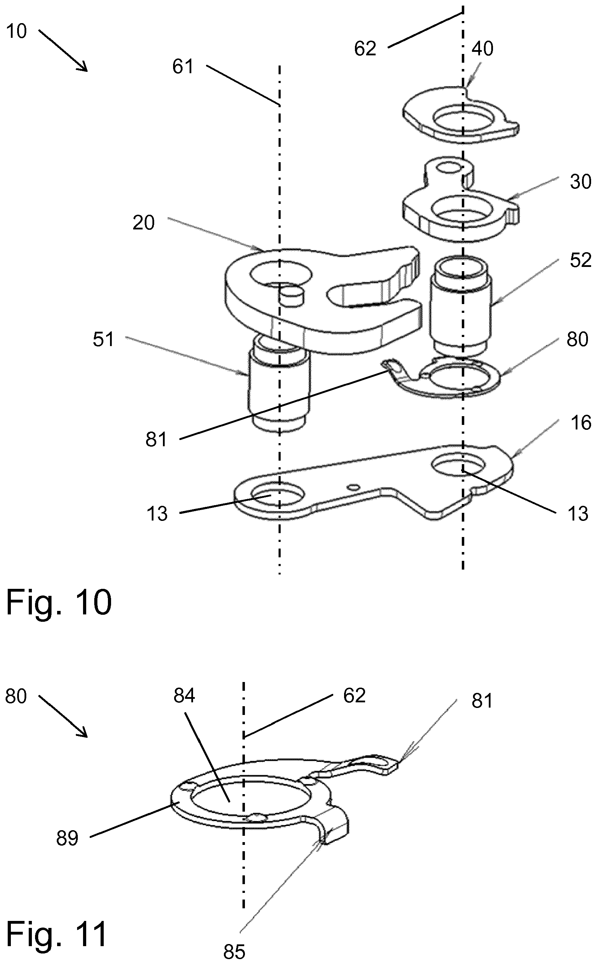

Die Federscheibe 80 weist ferner einen annähernd in Tangentialrichtung von dem Grundkörper 89 abstehenden Federarm 81 auf, welcher als Blockierelement dient. Der Federarm 81 erstreckt sich im kraftlosen Zustand, wie in Fig. 11 dargestellt, von dem Grundkörper 89 aus in einem Winkel zu der Axialrichtung und zu der Tangentialrichtung. Der Federarm 81 ist federnd ausgebildet und ist entgegen einer von ihm erzeugten Federkraft in eine Richtung parallel zu der Axialrichtung bewegbar.

Insbesondere kann der Federarm 81 durch entsprechende Kraftbeaufschlagung in eine Ebene gedrückt werden, welche von dem Grundkörper 89 definiert wird. Diese von dem Grundkörper 89 der Federscheibe 80 definierte Ebene erstreckt sich senkrecht zur Axialrichtung und weist, abweichend von einer mathematischen Ebene, eine Ausdehnung in Axialrichtung auf, welche der Dicke des Grundkörpers 89 der Federscheibe 80 entspricht.

Im entriegelten Zustand der Verriegelungseinheit 10, wie in Fig. 5 dargestellt, ragt der Federarm 81 der Federscheibe 80 teilweise in eine Ebene, welche von der Rastklinke 30 definiert wird. Diese von der Rastklinke 30 definierte Ebene erstreckt sich senkrecht zur Axialrichtung und weist eine Ausdehnung in Axialrichtung auf, welche der Dicke der Rastklinke 30 entspricht. Die von der Rastklinke 30 definierte Ebene verläuft also parallel und in Axialrichtung versetzt zu der von dem Grundkörper 89 der Federscheibe 80 definierten Ebene.

Im entriegelten Zustand der Verriegelungseinheit 10, wie in Fig. 5 dargestellt, drückt die Rastklinke 30 in Tangentialrichtung auf den Federarm 81 der Federscheibe 80, welche drehfest mit der Seitenplatte 16 verbunden ist. Der Federarm 81, welcher in Tangentialrichtung starr an dem Grundkörper 89 angebracht ist, blockiert dabei die Rastklinke 30 und verhindert eine weitere Bewegung der Rastklinke 30 sowie des Spannelements 40 auf die Drehfalle 20 zu.

Gelangt in diesem entriegelten Zustand der Verriegelungseinheit 10 ein in den Fig. 5 bis 9 nicht dargestelltes Gegenelement in Anlage an die Schließkontur 25, so drückt das Gegenelement die Drehfalle 20 in ihre geschlossene Stellung.

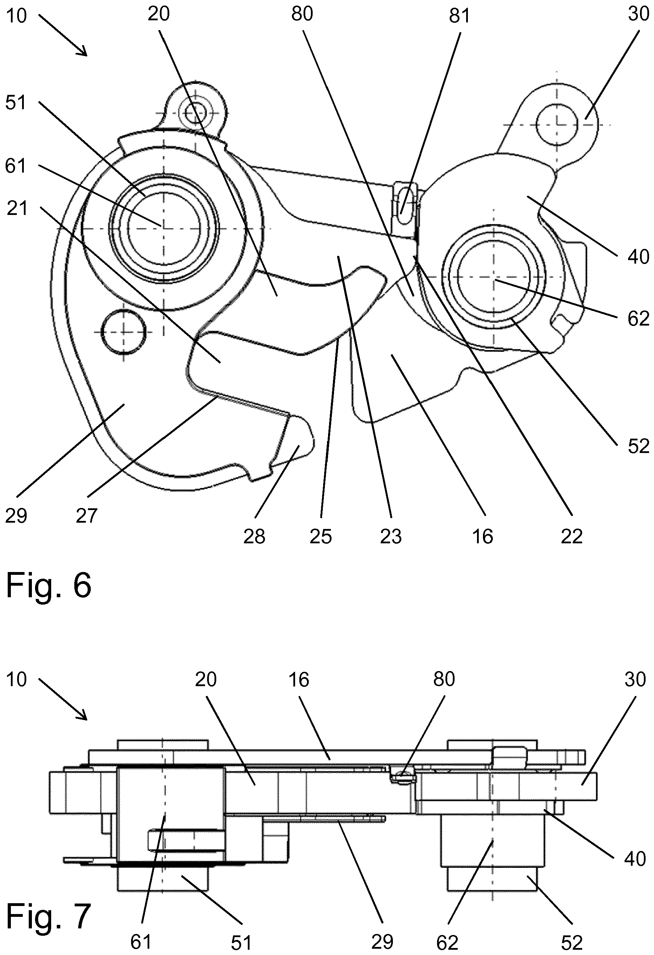

Während des Verriegelungsvorgangs nähert sich, wie in Fig. 6 dargestellt, ein Steuerarm 23 der Drehfalle 20 dem Federarm 81 der Federscheibe 80. Aus der Bewegungsrichtung des Steuerarms 23 gesehen bildet der Federarm 81 eine ansteigende Schräge, auf welche der Steuerarm 23 aufläuft. Dabei drückt der Steuerarm 23 im weiteren Verlauf den Federarm 81 in die von dem Grundkörper 89 der Federscheibe 80 definierte Ebene. Dabei bewegt sich der Federarm 81 vollständig aus der von der Rastklinke 30 definierten Ebene heraus.

Dadurch wird die Blockierung der Rastklinke 30 und des Spannelements 40 aufgehoben. Das Spannelement 40 bewegt sich entlang der Abstützkontur 22 der Drehfalle 20. Die Rastklinke 30, die nun nicht mehr von dem Federarm 81 blockiert ist, schwenkt auf die Drehfalle 20 zu, wobei sich die Rastfläche 31 der Abstützkontur 22 der Drehfalle 20 nähert.

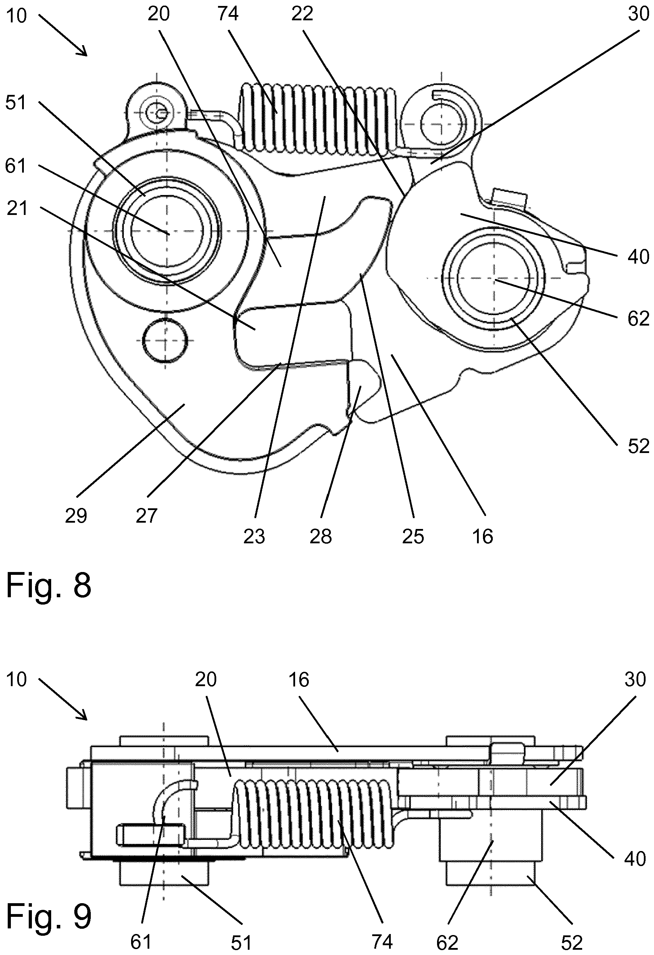

Danach befindet sich die Verriegelungseinheit 10 wieder im verriegelten Zustand, wie in Fig. 8 und Fig. 9 dargestellt. In Fig. 8 und Fig. 9 ist ferner einer Zugfeder 74 gezeigt, welche an der Drehfalle 20 und an der Rastklinke 30 eingehängt ist. Die Zugfeder 74 beaufschlagt die Drehfalle 20 in Öffnungsrichtung und die Rastklinke 30 in Richtung auf die Drehfalle 20 hin.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, solange der resultierende Gegenstand zum beanspruchten Schutzumfang gehört.

### Bezugszeichenliste

- 1: Fahrzeugsitz
- 3: Rückenlehne
- 5: Sitzteil
- 10: Verriegelungseinheit
- 12: Gegenelement
- 13: erste Lagerbohrung
- 14: zweite Lagerbohrung
- 16: Seitenplatte
- 18: Abdeckplatte
- 20: Drehfalle
- 21: Hakenmaul
- 22: Abstützkontur
- 23: Steuerarm
- 24: Drehfallenloch
- 25: Schließkontur
- 26: Offenhaltekontur
- 27: Haltekontur
- 28: Nase
- 29: Ummantelung
- 30: Rastklinke
- 31: Rastfläche
- 34: Rastklinkenloch
- 40: Spannelement
- 41: Spannfläche
- 44: Spannelementloch
- 51: erster Lagerbolzen
- 52: zweiter Lagerbolzen
- 55: Durchgangsöffnung
- 61: erste Schwenkachse
- 62: zweite Schwenkachse
- 71: erste Feder
- 72: zweite Feder
- 73: dritte Feder
- 74: Zugfeder
- 80: Federscheibe
- 81: Federarm
- 84: Federscheibenloch
- 85: Umbiegung
- 89: Grundkörper

## Patentansprüche

1. Verriegelungseinheit (10) für einen Fahrzeugsitz (1), umfassend eine zwischen einer geöffneten Stellung und einer geschlossenen Stellung um eine erste Schwenkachse (61) schwenkbar gelagerte Drehfalle (20) und mindestens ein um eine in eine Axialrichtung verlaufende zweite Schwenkachse (62) schwenkbar gelagertes Sicherungselement (30, 40) zur Sicherung der geschlossenen Stellung der Drehfalle (20) und ein Blockierelement (81), welches bei in geöffneter Stellung befindlicher Drehfalle (20) das Sicherungselement (30, 40) in einer geöffneten Position blockiert, wobei das Blockierelement (81) relativ zu dem Sicherungselement (30, 40) in eine Richtung parallel zu der Axialrichtung beweglich ist, wobei das Blockierelement (81) Teil einer Federscheibe (80) ist, welche ein Federscheibenloch (84) aufweist, dessen Zentralachse in Axialrichtung verläuft, wobei ein Lagerbolzen (52), auf welchem das Sicherungselement (30, 40) gelagert ist, das Federscheibenloch (84) durchragt,
**dadurch gekennzeichnet, dass**
die Federscheibe (80) drehfest mit einer Seitenplatte (16) verbunden ist, an welcher der Lagerbolzen (52) befestigt ist.

2. Verriegelungseinheit (10) nach Anspruch 1, **dadurch gekennzeichnet, dass** die erste Schwenkachse (61) parallel zu der Axialrichtung verläuft.

3. Verriegelungseinheit (10) nach einem der vorstehenden Ansprüche, **dadurch gekennzeichnet, dass** das Blockierelement (81) als von der Drehfalle (20) separates Bauteil ausgebildet ist.

4. Verriegelungseinheit (10) nach einem der vorstehenden Ansprüche, **dadurch gekennzeichnet, dass** das Blockierelement (81) überwiegend parallel zu der Axialrichtung federnd ausgebildet ist.

5. Verriegelungseinheit (10) nach einem der Ansprüche 1 bis 4, **dadurch gekennzeichnet, dass** das Blockierelement (81) als Federarm (81) ausgebildet ist, welcher von einem Grundkörper (89) der Federscheibe (80) in Tangentialrichtung absteht.

6. Verriegelungseinheit (10) nach einem der Ansprüche 1 bis 5, **dadurch gekennzeichnet, dass** die Federscheibe (80) einen annähernd flachen Grundkörper (89) mit annähernd rundem Querschnitt aufweist.

7. Verriegelungseinheit (10) nach einem der Ansprüche 1 bis 6, **dadurch gekennzeichnet, dass** die Federscheibe (80) eine Umbiegung (85) aufweist, welche sich von einem äußeren Rand des Grundkörpers (89) aus parallel zur Axialrichtung erstreckt und an einem Rand der Seitenplatte (16) anliegt.

8. Verriegelungseinheit (10) nach einem der Ansprüche 1 bis 7, **dadurch gekennzeichnet, dass** die Federscheibe (80) in axialer Richtung durch eine Stufe in dem Lagerbolzen (52) gesichert ist.

9. Verriegelungseinheit (10) nach einem der Ansprüche 1 bis 8, **dadurch gekennzeichnet, dass** die Drehfalle (20) ein Drehfallenloch (24) aufweist, welches von einem Lagerbolzen (52) durchragt wird, dessen Mittelachse mit der ersten Schwenkachse (61) fluchtet.

10. Verriegelungseinheit (10) nach einem der Ansprüche 1 bis 9, **dadurch gekennzeichnet, dass** die Federscheibe (80) derart angeordnet ist, dass der Federarm (81) auf die in geschlossener Stellung befindliche Drehfalle (20) eine Kraft in Richtung parallel zu der Axialrichtung ausübt.

11. Fahrzeugsitz (1), umfassend mindestens eine Verriegelungseinheit (10) nach einem der vorstehenden Ansprüche.

12. Fahrzeugsitz (1) nach Anspruch 11, **dadurch gekennzeichnet, dass** der Fahrzeugsitz (1) ein Rücksitz ist.

## Claims

1. Locking unit (10) for a vehicle seat (1), comprising a rotary latch (20) which is mounted so as to be pivotable about a first pivot axis (61) between an open position and a closed position, and at least one securing element (30, 40) which is mounted so as to be pivotable about a second pivot axis (62) running in an axial direction, for securing the closed position of the rotary latch (20), and a blocking element (81) which, when the rotary latch (20) is in the open position, blocks the securing element (30, 40) in an open position, wherein the blocking element (81) is movable relative to the securing element (30, 40) in a direction parallel to the axial direction, wherein the blocking element (81) is part of a spring disc (80) which has a spring disc hole (84), the central axis of which runs in the axial direction, wherein a bearing pin (52) on which the securing element (30, 40) is mounted protrudes through the spring disc hole (84), **characterized in that** the spring disc (80) is connected non-rotatably to a side plate (16) to which the bearing pin (52) is fastened.

2. Locking unit (10) according to Claim 1, **characterized in that** the first pivot axis (61) runs parallel to the axial direction.

3. Locking unit (10) according to either of the preceding claims, **characterized in that** the blocking element (81) is in the form of a component which is separate from the rotary latch (20).

4. Locking unit (10) according to one of the preceding claims, **characterized in that** the blocking element (81) is formed resiliently predominantly parallel to the axial direction.

5. Locking unit (10) according to one of Claims 1 to 4, **characterized in that** the blocking element (81) is in the form of a spring arm (81) which protrudes in the tangential direction from a basic body (89) of the spring disc (80).

6. Locking unit (10) according to one of Claims 1 to 5, **characterized in that** the spring disc (80) has an approximately flat basic body (89) with an approximately round cross section.

7. Locking unit (10) according to one of Claims 1 to 6, **characterized in that** the spring disc (80) has a bent-over portion (85) which extends parallel to the axial direction from an outer edge of the basic body (89) and lies against an edge of the side plate (16) .

8. Locking unit (10) according to one of Claims 1 to 7, **characterized in that** the spring disc (80) is secured in the axial direction by a step in the bearing pin (52).

9. Locking unit (10) according to one of Claims 1 to 8, **characterized in that** the rotary latch (20) has a rotary latch hole (24) through which a bearing pin (52) protrudes, the centre axis of which bearing pin is aligned with the first pivot axis (61).

10. Locking unit (10) according to one Claims 1 to 9, **characterized in that** the spring disc (80) is arranged in such a manner that the spring arm (81) exerts a force in a direction parallel to the axial direction on the rotary latch (20) located in the closed position.

11. Vehicle seat (1), comprising at least one locking unit (10) according to one of the preceding claims.

12. Vehicle seat (1) according to Claim 11, **characterized in that** the vehicle seat (1) is a rear seat.

## Revendications

1. Unité de verrouillage (10) pour un siège de véhicule (1), comprenant un pêne (20) supporté de manière à pouvoir pivoter autour d'un premier axe de pivotement (61) entre une position ouverte et une position fermée et au moins un élément de fixation (30, 40) supporté de manière pivotante autour d'un deuxième axe de pivotement (62) s'étendant dans une direction axiale, pour la fixation de la position fermée du pêne (20) et un élément de blocage (81) qui, lorsque le pêne (20) se trouve dans la position ouverte, bloque l'élément de fixation (30, 40) dans une position ouverte, l'élément de blocage (81) pouvant être déplacé par rapport à l'élément de fixation (30, 40) dans une direction parallèle à la direction axiale, l'élément de blocage (81) faisant partie d'un disque de ressort (80) qui présente un trou de disque de ressort (84) dont l'axe central s'étend dans la direction axiale, un boulon de palier (52) sur lequel est supporté l'élément de fixation (30, 40) traversant le trou de disque de ressort (84),
**caractérisée en ce que**
le disque de ressort (80) est connecté de manière solidaire en rotation à une plaque latérale (16) à laquelle est fixé le boulon de palier (52).

2. Unité de verrouillage (10) selon la revendication 1, **caractérisée en ce que** le premier axe de pivotement (61) s'étend parallèlement à la direction axiale.

3. Unité de verrouillage (10) selon l'une quelconque des revendications précédentes, **caractérisée en ce que** l'élément de blocage (81) est réalisé sous forme de composant séparé du pêne (20).

4. Unité de verrouillage (10) selon l'une quelconque des revendications précédentes, **caractérisée en ce que** l'élément de blocage (81) est réalisé de manière élastique essentiellement parallèlement à la direction axiale.

5. Unité de verrouillage (10) selon l'une quelconque des revendications 1 à 4, **caractérisée en ce que** l'élément de blocage (81) est réalisé sous forme de bras de ressort (81) qui fait saillie depuis un corps de base (89) du disque de ressort (80) dans la direction tangentielle.

6. Unité de verrouillage (10) selon l'une quelconque des revendications 1 à 5, **caractérisée en ce que** le disque de ressort (80) présente un corps de base (89) approximativement plat avec une section transversale approximativement ronde.

7. Unité de verrouillage (10) selon l'une quelconque des revendications 1 à 6, **caractérisée en ce que** le disque de ressort (80) présente une courbure (85) qui s'étend depuis un bord extérieur du corps de base (89) parallèlement à la direction axiale et qui s'applique contre un bord de la plaque latérale (16).

8. Unité de verrouillage (10) selon l'une quelconque des revendications 1 à 7, **caractérisée en ce que** le disque de ressort (80) est fixé dans la direction axiale par un étage dans le boulon de palier (52).

9. Unité de verrouillage (10) selon l'une quelconque des revendications 1 à 8, **caractérisée en ce que** le pêne (20) présente un trou de pêne (24) qui est traversé par un boulon de palier (52) dont l'axe médian est aligné avec le premier axe de pivotement (61).

10. Unité de verrouillage (10) selon l'une quelconque des revendications 1 à 9, **caractérisée en ce que** le disque de ressort (80) est disposé de telle sorte que le bras de ressort (81) exerce sur le pêne (20) se trouvant dans la position fermée une force dans une direction parallèle à la direction axiale.

11. Siège de véhicule (1) comprenant au moins une unité de verrouillage (10) selon l'une quelconque des revendications précédentes.

12. Siège de véhicule (1) selon la revendication 11, **caractérisé en ce que** le siège de véhicule (1) est un siège arrière.
